(19) Europäisches Patentamt
European Patent Office
Office européen des brevets

(11) Veröffentlichungsnummer: **0 055 818**
**B1**

(12) # EUROPÄISCHE PATENTSCHRIFT

(45) Veröffentlichungstag der Patentschrift: **14.08.85**

(51) Int. Cl.[4]: **C 08 G 65/28**, C 08 G 65/32, C 08 G 18/48 // B01D17/04

(21) Anmeldenummer: **81109337.6**

(22) Anmeldetag: **30.10.81**

(54) **Verfahren zur Herstellung von Blockpolymerisaten mit mindestens drei Polyalkylenoxidblöcken.**

(30) Priorität: **03.01.81 DE 3100080**

(43) Veröffentlichungstag der Anmeldung:
**14.07.82 Patentblatt 82/28**

(45) Bekanntmachung des Hinweises auf die Patenterteilung:
**14.08.85 Patentblatt 85/33**

(84) Benannte Vertragsstaaten:
**AT BE CH FR GB IT LI LU NL SE**

(56) Entgegenhaltungen:
**CH - A - 370 920**
**DE - A - 2 136 572**
**GB - A - 2 020 702**
**US - A - 3 278 457**

**TENSIDE DETERGENTS, Band 17, Nr. 2, März/April 1980 München K. OPPENLÄNDER et al. "Tenside für die Tertiärförderung von Erdöl in hochsalinaren Systemen - Kriterien für die Tensidauswahl und Anwendungstechnik" Seiten 57 bis 67**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polyalkylenoxidblockpolymerisaten mit mindestens drei Polyalkylenoxidblöcken, wobei mindestens zwei Polyalkylenoxidblöcke gleichen Aufbau haben und sich hierin von dem anderen Polyalkylenoxidblock oder den anderen Polyalkylenoxidblöcken unterscheiden können, durch Anlagerung von Alkylenoxiden oder Gemischen hiervon an einen mindestens dreiwertigen Alkohol.

Es ist bekannt, an mehrwertige Alkohole Alkylenoxid oder Gemische hiervon anzulagern. So ist es z.B. möglich, Ethylenoxid und/oder Propylenoxid an Glycerin, Trimethylolpropan oder Pentaerythrit anzulagern. Lagert man Gemische der Alkylenoxide an, erhält man Polyalkylenoxidketten mit einer der Reaktivität der Alkylenoxide entsprechenden, angenähert statistischen Verteilung der Alkylenoxideinheiten im jeweiligen Block. Lagert man nacheinander z.B. Ethylenoxid und dann Propylenoxid an, erhält man Polyalkylenoxidblöcke mit wechselnden Segmenten von Polyethylenoxid- und Polypropylenoxideinheiten.

Insbesondere sind trifunktionelle Ethylenoxid/Propylenoxid-Addukte an Glycerin bekannt; diese tragen etwa 63 bis 126 Propylenoxidgruppen am Glycerin und daran angelagert 33 bis 135 Mol Ethylenoxid pro Mol Glycerin. Sie finden als Textilhilfsmittel, als Dispergier-, Emulgier- und Netzmittel, als Emulgatoren in Insektiziden, in kosmetischen Einstellungen und in Spülmitteln Verwendung.

Eine wichtige Gruppe stellen Ethylenoxid/Propylenoxid-Addukte an tetrafunktionellen Startmolekülen dar. Produkte mit vier reaktiven Wasserstoffatomen sind neben dem Pentaerythrit z.B. die aliphatischen Diamine, wie Ethylendiamin oder Hexamethylendiamin. Diese werden zunächst meist mit Propylenoxid und dann mit Ethylenoxid umgesetzt. Solche Produkte sind unter dem Namen Tetronics im Handel erhältlich. Sie werden als Dismulgatoren zum Spalten von Wasser in Öl-Emulsionen in der Erdölindustrie und als Antistatika für Polyethylen und synthetische Harze verwendet.

Die genannten mehrfunktionellen Polyether können als verzweigte Polymere bezeichnet werden, in denen die einzelnen Zweige sich in ihrem chemischen Aufbau nicht grundsätzlich voneinander unterscheiden. Es bereitet jedoch erhebliche Schwierigkeiten, Verbindungen herzustellen, die unterschiedlich aufgebaute Zweige aufweisen. Verbindungen mit solchen Strukturen sind jedoch von grossem Interesse, da sie besondere tensidische Eigenschaften aufweisen, indem z.B. hydrophile Ethylenoxidzweige mit hydrophoben Polypropylenoxidzweigen miteinander kombiniert werden. Sie eignen sich insbesondere für Zwecke der Emulgierung oder Dismulgierung, der Schaumstabilisierung oder der Schaumzerstörung. Sie wurden z.B. als Tenside für die Tertiärförderung von Erdöl vorgeschlagen (K. Oppenländer et al, Tenside Detergents 17 [1980] 2).

Der Fachmann hat somit ein besonderes Interesse, Blockmischpolymerisate mit mehreren voneinander getrennten Polyalkylenoxidblöcken herzustellen, bei denen die einzelnen Polyakylenoxidblöcke in bezug auf ihre Hydrophilie oder Hydrophobie strukturverschieden und anwendungsgerecht aufgebaut sind.

In der Patentanmeldung P 30 23 059.2 ist ein Verfahren zur Herstellung von Derivaten von Polymerisaten der Struktureinheit

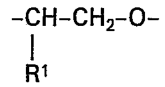

wobei $R^1$ eine gegebenenfalls halogenierte Kohlenwasserstoffgruppe mit 1 bis 30 Kohlenstoffatomen oder die Gruppe $-CH_2-O-R^2$, in der $R^2$ eine Alkyl- oder Alkenylgruppe ist, bedeutet, mit mindestens einer endständigen primären Hydroxylgruppe beschrieben, welches dadurch gekennzeichnet ist, dass man ein Oxiran der allgemeinen Formel

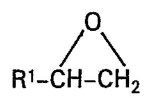

wobei $R^1$ die obengenannte Bedeutung hat, in an sich bekannter Weise an einen mindestens drei Hydroxylgruppen aufweisenden mehrwertigen Alkohol, von dem mindestens zwei Hydroxylgruppen in Form eines Acetals oder Ketals vorliegen und mindestens eine dieser beiden Hydroxylgruppen eine primäre Hydroxylgruppe ist, anlagert und die Acetal- oder Ketalgruppe nach der Anlagerung in an sich bekannter Weise durch Einwirkung von Säure spaltet.

Es wurde nun gefunden, dass man die Aufgabe, Blockmischpolymerisate mit mindestens drei Polyalkylenoxidblöcken, wobei mindestens zwei Polyalkylenoxidblöcke gleichen Aufbau haben und sich hierin von dem anderen Polyalkylenoxidblock oder den anderen Polyalkylenoxidblöcken unterscheiden können, herzustellen, dadurch lösen kann, dass man

a) Alkylenoxide oder deren Gemische an die freie Hydroxylgruppe eines drei- oder mehrwertigen Alkohols, von dem mindestens zwei Hydroxylgruppen in Form eines Acetals oder Ketals vorliegen und mindestens eine dieser beiden Hydroxylgruppen eine primäre Hydroxylgruppe ist, anlagert,
b) die Acetal- oder Ketalgruppe durch Einwirkung von Säure spaltet und
c) an die nach b) erhaltene Verbindung Alkylenoxide oder deren Gemische anlagert.

Der Fachmann hat es nun in der Hand, die tensidischen Eigenschaften der Verfahrensprodukte durch die Auswahl der Alkylenoxide bzw. deren Gemische gezielt zu beeinflussen. So ist es beispielsweise möglich, in der Verfahrensstufe a)

durch völlige oder überwiegende Verwendung von Ethylenoxid eine Polyakylenoxidkette hydrophilen Charakters aufzubauen. Man hat dann die Möglichkeit, in der Verfahrensstufe c) durch Anlagerung von Propylenoxid oder Propylenoxid enthaltenden Gemischen an das reaktive Verfahrensprodukt der Stufe b) Alkylenoxidblöcke mit hydrophoben Eigenschaften zu knüpfen. Es ergibt sich somit die Möglichkeit, das Gleichgewicht zwischen hydrophilen und hydrophoben Eigenschaften entsprechend dem geforderten Verwendungszweck auszubalancieren.

Verwendet man in der Verfahrensstufe a) als Ausgangsalkohol einen dreiwertigen Alkohol, bei dem zunächst die zwei benachbarten Hydroxylgruppen durch Acetal- oder Ketalbildung blokkiert sind und lagert an die verbleibende Hydroxylgruppe Alkylenoxid an, spaltet man in der Verfahrensstufe b) die Acetal- oder Ketalgruppe und lagert in der Verfahrensstufe c) an die zurückgebildeten Hydroxylgruppen erneut Alkylenoxid an, erhält man Verbindungen mit drei Alkylenoxidblöcken, von denen zwei gleichen Aufbau haben und sich von dem dritten Alkylenoxidblock unterscheiden können.

Um zu vermeiden, dass an die endständige Hydroxylgruppe des in der Verfahrensstufe a) gebildeten Polyalkylenoxidmonools in der Verfahrensstufe c) erneut Alkylenoxid angelagert wird, hat es sich als besonders zweckmässig erwiesen, das erfindungsgemässe Verfahren in der Weise zu ergänzen, dass man die nach der Verfahrensstufe a) vorliegende endständige Hydroxylgruppe des Polyalkylenoxidmonools vor der Verfahrensstufe b) blockiert.

Die Blockierung der endständigen Hydroxylgruppe des Polyalkylenoxidmonools, die vor der Verfahrensstufe b) durchgeführt werden und unter den Bedingungen der Verfahrensstufe b) erhalten bleiben soll, kann durch dem Fachmann bekannte Substitutions- oder Additionsreaktionen erfolgen. Beispiel einer Substitutionsreaktion ist die Umsetzung der Hydroxylgruppe mit einem Alkylhalogenid, wobei der Kohlenwasserstoffrest 1 bis 4 Kohlenstoffatome aufweisen kann, z.B. Methylchlorid, oder einem Arylalkylhalogenid, z.B. Benzylchlorid. Beispiel einer geeigneten Additionsreaktion ist die Umsetzung der Hydroxylgruppe des Polyethers mit einem organischen Monoisocyanat, z.B. einem Alkylisocyanat, wie Propylisocyanat, Butylisocyanat, Cyclohexylisocyanat, oder einem Arylmonoisocyanat, z.B. Phenylisocyanat. Es ist ferner möglich, eine Additionsreaktion mit einer olefinisch ungesättigten Verbindung durchzuführen. Beispiele solcher Verbindungen sind die Verbindungen mit einer Vinylgruppe, wie etwa Acrylnitril, Acrylsäuremethylester oder Methylvinylketon.

In einer weiteren Variante des erfindungsgemässen Verfahrens verfährt man so, dass man die endständigeHydroxylgruppe des Polyalkylenoxidmonools reversibel blockiert und die endbegrenzende Gruppe nach der Verfahrensstufe c) wieder abspaltet. So ist es z.B. möglich, die Hydroxylgruppe mit einer organischen Monocarbonsäure oder einem Säurechlorid zu verestern. Durch Verseifung des Esters kann zu einem späteren Zeitpunkt die blockierende Gruppe abgespalten und die Hydroxylgruppe restituiert werden.

An die Stelle einer Blockierung der endständigen Hydroxylgruppe des Polyalkylenoxidmonools kann aber auch eine intermolekulare Verknüpfung zweier oder mehrerer dieser Monoole treten.

Diese Variante des erfindungsgemässen Verfahrens ist deshalb dadurch gekennzeichnet, dass man die nach der Verfahrensstufe a) vorliegenden Polyalkylenoxidmonoole intermolekular durch Umsetzung mit einer mindestens difunktionellen in bezug auf Hydroxylgruppen reaktiven Verbindung verknüpft. Für diese intermolekulare Verknüpfung haben sich insbesondere die organischen Di- oder Polyisocyanate als geeignet erwiesen.

Beispiele besonders geeigneter Polyisocyanate sind 2,4- und 2,6-Toluylendiisocyanat sowie Gemische dieser Isocyanate, Diphenylmethan-4,4'-diisocyanat; 1,3- und 1,4-Phenylendiisocyanat; Naphthylen-1,5-diisocyanat; 1,4-Tetramethylendiisocyanat; 1,6-Hexamethylendiisocyanat; Cyclohexan-1,3- und -1,4-diisocyanat; iso-Phorondiisocyanat; Triphenylmethan-4,4'- und -4,2-triisocyanat; 2,4,6-Toluoltriisocyanat; Thiophosphor-tris(p-isocyanatophenylester); Umsetzungsprodukte von Trimethylolpropan mit Toluylendiisocyanat oder mit iso-Phorondiisocyanat; Umsetzungsprodukte von Hexamethylen-1,6-diisocyanat und Wasser.

Anstelle der Isocyanate kann man auch difunktionelle oder höherfunktionelle Säurechloride, wie z.B. Adipinsäuredichlorid, Phthalsäuredichlorid, Terephthalsäuredichlorid, verwenden.

Für die intermolekulare Verknüpfung sind natürlich auch andere in bezug auf die Hydroxylgruppe reaktive Verbindungen, wie z.B. Halogensilane oder Halogensiloxane oder die entsprechenden Alkoxysilane und Alkoxysiloxane mit mindestens zwei Halogen- bzw. Alkoxygruppen geeignet. Es sind ferner Di- oder Polyhalogenalkane, wie z.B. Dibrommethan; 1,2-Dibrommethan; 1,4-Dibrombutan oder Chlorbrommethan geeignet.

Nach der Verfahrensstufe a), die wie oben erläutert mit der Blockierung der endständigen Hydroxylgruppe des Polyalkylenoxidmonools oder der intermolekularen Verknüpfung der Monoole abgeschlossen werden kann, erfolgt der Verfahrensschritt b).

Die Spaltung der Acetal- oder Ketalgruppe durch Einwirkung von Säure ist eine mit praktisch vollständiger Ausbeute unter milden Bedingungen ablaufende Reaktion und dem Fachmann geläufig. In dieser Verfahrensstufe werden je nach Funktionalität des Ausgangsalkohols und der Anzahl der Acetal- oder Ketalgruppen jedoch mindestens zwei Hydroxylgruppen gebildet.

An diese Hydroxylgruppen werden nun in der Verfahrensstufe c) erneut Alkylenoxide oder deren Gemische angelagert.

Als Alkylenoxide verwendet man beim erfindungsgemässen Verfahren Verbindungen der allgemeinen Formel

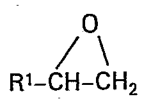

worin $R^1$ ein Wasserstoffrest oder eine, gegebenenfalls halogenierte, Kohlenwasserstoffgruppe mit 1 bis 30 Kohlenstoffatomen oder die Gruppe $-CH_2-O-R^2$ ist, worin $R^2$ eine Alkyl- oder Alkenylgruppe ist.

Die Gruppe $R^1$ kann eine Alkylgruppe mit 1 bis 30 Kohlenstoffatomen sein. Bevorzugt ist $R^1$ eine Alkylgruppe mit 1 bis 4, insbesondere 1 bis 2, Kohlenstoffatomen. Ist $R^1$ eine Methylgruppe, handelt es sich um Propylenoxid. Die Alkylgruppe kann gegebenenfalls halogeniert sein und z.B. Chlorreste aufweisen. Beispiel einer solchen halogenierten Gruppe $R^1$ ist die $CH_2Cl$-Gruppe. Die Alkylgruppe kann auch ungesättigt sein. Beispiel einer solchen ungesättigten Alkylgruppe ist die Vinyl- oder Allylgruppe.

Die Gruppe $R^1$ kann auch eine Phenylgruppe, die gegebenenfalls substituiert ist, sein. Im einfachsten Falle handelt es sich bei dem Oxiran dann um Styroloxid.

Die Gruppe $R^1$ kann auch die Bedeutung der Gruppe $-CH_2-O-R^2$ haben, wobei $R^2$ eine Alkyl- oder Alkenylgruppe ist. Beispiel einer geeigneten Alkylgruppe ist die Butylgruppe; Beispiel einer geeigneten Alkenylgruppe ist die Vinyl- oder Allylgruppe.

Innerhalb des Polymerisats kann die Bedeutung der Gruppe $R^1$ gleich oder verschieden sein. So kann beispielsweise ein Polymerisat aus Struktureinheiten aufgebaut sein, bei denen $R^1$ die Bedeutung einer Methylgruppe hat sowie aus anderen Struktureinheiten, bei denen $R^1$ die Bedeutung der Gruppe $CH_2OR^2$, in der $R^2$ eine Vinylgruppe ist, hat. Selbstverständlich sind auch alle anderen Kombinationen möglich; sie werden im wesentlichen von den Eigenschaften bestimmt, die das herzustellende Polymerisat aufweisen soll.

Als Alkylenoxide können weiter genannt werden: Butylenoxid; Isobutylenoxid; Epichlorhydrin; Epibromhydrin; Trifluormethylethylenoxid; 1,2-Dichlor-3,4-epoxybutan; 1,1-Dichlor-2,3-epoxybutan; 1,1,1-Trichlor-3,4-epoxybutan; Cyclohexanoxid; Dipentenepoxid; Methylglycidylether; Ethylglycidylether; Isopropylglycidylether; tert.-Butylglycidylether; n-Hexylglycidylether; Ethylhexylglycidylether; Phenylglycidylether; Chlorphenylglycidylether; Nitrophenylglycidylether; Vinylglycidylether; Allylglycidylether; Butadienmonooxid.

Die Anlagerung der Alkylenoxide bzw. von deren Gemischen erfolgt unter Verwendung der an sich bekannten Katalysatoren. In der Verfahrensstufe a) ist darauf zu achten, dass durch die Katalysatoren die Acetal- oder Ketalgruppen nicht abgespalten werden. Als Anlagerungskatalysatoren werden beim erfindungsgemässen Verfahren deshalb insbesondere die bekannten basischen Katalysatoren, wie z.B. Natriumhydroxid, Kaliumhydroxid, Calciumhydroxid, Magnesiumhydroxid sowie deren Alkoholate, insbesondere deren Methanolate, verwendet. Zur Herstellung von Polymerisationsprodukten besonders hohen Molekulargewichtes haben sich die aus den US-Patenschriften 3 278 457, 3 278 458 und 3 278 459 bekannten Doppelmetallcyanatkomplexkatalysatoren besonders bewährt. Beispiele derartiger Katalysatoren sind Komplexverbindungen, insbesondere Zn-hexacyanoferrat(III), Zn-hexacyanoferrit(II), Ni(II)-hexacyano-ferrat(II), Ni(III)-hexacyano-ferrat(III), Zn-hexacyano-ferrat(III)-hydrat, Co(II)-hexacyano-ferrat(III), Ni(II)-hexacyanoferrat(III)-hydrat, Fe(II)-hexacyano-ferrat(III), Co(II)-hexacyano-cobaltat(III), Zn-hexacyanocobaltat(III)-hydrat, die mit einem im wesentlichen wasserlöslichen, gesättigten, acyclischen, aliphatischen Polyether komplexiert sind, der frei von aktiven Wasserstoffatomen ist und ein Molekulargewicht bis zu etwa 400 aufweist. Desgleichen eignen sich Addukte aus Zinkdiethyl und Wasser bzw. niederen Alkoholen, z.B. Methanol, als Katalysatoren.

Als mindestens dreiwertiger Alkohol, dessen Acetale oder Ketale in der Verfahrensstufe a) verwendet werden, sind besonders Glycerin, Alkohole der Formel

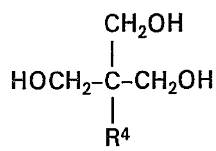

I

wobei $R^4$ ein Alkylrest mit 1 bis 4 Kohlenstoffatomen ist, sowie Pentaerythrit geeignet.

Im Falle der Verwendung von Glycerin steht dann nach Ablauf der Verfahrensstufen a) und b) für die weitere Anlagerung der Alkylenoxide eine Verbindung der Formel

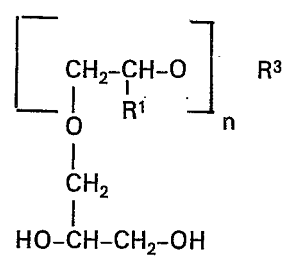

II

zur Verfügung,
worin $R^1$ die bereits angegebene Bedeutung hat und
$R^3$ ein Wasserstoffrest oder eine blockierende Gruppe oder der Anteil einer molekülverknüpfenden Gruppe ist,
n eine ganze Zahl >1 bedeutet.

Wählt man als mehrwertigen Ausgangsalkohol den vorgenannten Alkohol der Formel I, erhält man zur Durchführung der Verfahrensstufe c) ein Zwischenprodukt der Formel

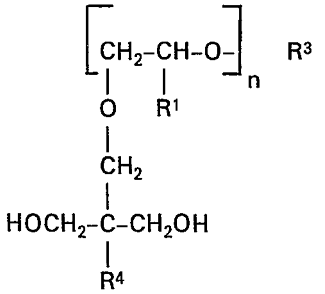

III

im Falle der Verwendung von Pentaerythrit eine Verbindung der Formel

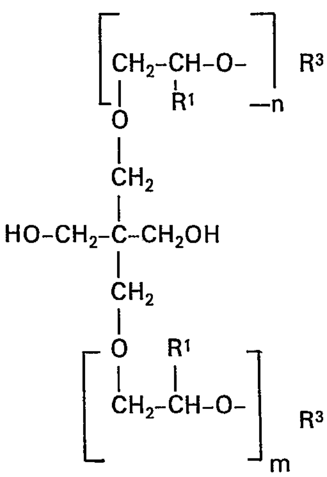

IV

wobei in den Formeln III and IV die Indices $R^1$, $R^3$, $R^4$ und n die angegebene Bedeutung haben. m ist eine ganze Zahl $>1$ und wird im allgemeinen dem Wert der Zahl des Index n entsprechen.

Das erfindungsgemässe Verfahren gibt somit dem Fachmann die Lehre, Polyalkylenoxidderivate von mehrwertigen Alkoholen herzustellen, bei denen mindestens ein Polyalkylenoxidzweig von den anderen Polyalkylenoxidzweigen verschieden sein kann. Im folgenden werden schematisch verschiedene Typen von nach dem erfindungsgemässen Verfahren herstellbaren Polymerisaten gezeigt, wobei jedoch auch weitere Typen erhältlich sind. Zur Vereinfachung wird dabei angenommen, dass als Alkylenoxid nur Ethylenoxid und Propylenoxid bzw. Gemische hiervon verwendet werden. Bei dieser schematischen Darstellung wird mit 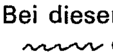 der hydrophile Zweig, mit 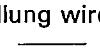 der demgegenüber hydrophobere Zweig der erfindungsgemässen Verbindungen symbolisiert. Das Zeichen O bedeutet eine blockierende oder intermolekular verknüpfende Gruppe.

Typ I Lagert man an einen acetalisierten oder ketalisierten dreiwertigen Alkohol Propylenoxid oder propylenoxidreiche Propylenoxid/Ethylenoxid-Gemisch an, blockiert die entstandene endständige Hydroxylgruppe des Polypropylenoxidzweiges, spaltet das Acetal oder Ketal und lagert Ethylenoxid oder ethylenoxidreiche Ethylenoxid/Propylenoxid-Gemische an die rückgebildeten Hydroxylgruppen des Startalkohols, entsteht eine Verbindung der Struktur

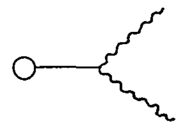

Typ II Arbeitet man wie zur Herstellung des Typs I, blockiert jedoch nicht vor der Verfahrensstufe b) die endständige Hydroxylgruppe, sondern verknüpft das erhaltene Zwischenprodukt intermolekular, erhält man Verbindungen folgender Struktur

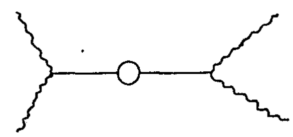

Typ III Verfährt man wie bei der Herstellung des Typs I, blockiert jedoch nicht die endständige Hydroxylgruppe des Zwischenproduktes, so wird an diese in der Verfahrensstufe c) ebenfalls Ethylenoxid oder ethylenoxidreiches Ethylenoxid/Propylenoxid-Gemisch angelagert. Es entstehen Verbindungen der Struktur

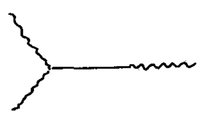

Typ IV Zur Herstellung dieses Typs werden an den Startalkohol in Umkehrung der Herstellung des Typs I zunächst der hydrophile Zweig und in der Verfahrensstufe c) die hydrophoben Zweige aufgebaut. Man erhält folgende Struktur

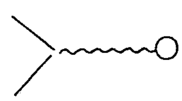

Typ V Gleiches gilt für Typ V, der den Verbindungen des Typs II entspricht

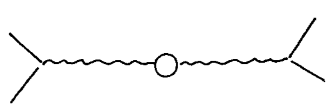

Typ VI Verfährt man wie zur Herstellung des Typs I, verwendet jedoch als Startalkohol z.B. Pentaerythrit in Form seines Monoacetals oder -ketals, erhält man Verbindungen der Struktur

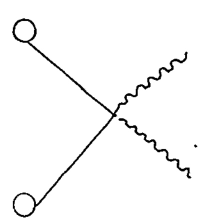

Die nach dem erfindungsgemässen Verfahren hergestellten Verbindungen sind u.a. schaumarme Produkte, die in gewissem Umfang selbst

auch schaumdämpfend wirken können. Sie sind gute Emulgatoren für viele Öl-in-Wasser- und Wasser-in-Öl-Emulsionen. In bestimmten Einstellungen eignen sie sich auch zur Spaltung von Wasser-in-Öl- und Öl-in-Wasser-Emulsionen (Dismulgatoren), d.h. sie sind wirksame Erdöltenside.

Ferner können sie als Textilhilfsmittel, als Dispergier- und Netzmittel und als Emulgatoren in Insektiziden verwendet werden. Wegen ihrer geringen oralen Toxizität können sie in der Kosmetik und in Spülmitteln verwendet werden.

Sie sind sehr stabil gegen Säuren und Alkalien und sind allen Reaktionen zugänglich, die man mit normalen Alkoholen durchführen kann.

Beispiel 1

(Herstellung eines verzweigten Ethylenoxid-Propylenoxid-Blockcopolymerdiols – Typ I)

A) Anlagerung von Propylenoxid

In 174 g (ca. 1 Mol) 2,2-Dimethyl-5-hydroxymethyl-5-ethyl-1,3-dioxan werden mit einem scherkraftreichen Rührer 2,5 g $Zn_3[Co(CN)_6]$ komplexiert mit Dimethylglykol dispergiert. Das Gemisch wird in einen Reaktor mit einem zwangsfördernden Umlaufsystem gebracht. Nach sorgfältiger Spülung mit Reinstickstoff wird der Reaktor auf 120°C geheizt und 1060 g (ca. 18,3 Mol) Propylenoxid so schnell zugegeben, dass die Reaktorinnentemperatur einen Wert von 120°C und der Druck einen Wert von 3 bar nicht überschreiten. Nach vollständiger Einleitung des Propylenoxids wird die Temperatur solange auf 120°C gehalten, bis ein gleichbleibender Druck das Ende der Nachreaktion anzeigt; danach wird bei 80 bis 90°C unter Vakuum von 1333 Pa (10 mm Hg-Säule) die Entfernung von Restmonomeren vorgenommen.

Die Hydroxylzahl des vom Katalysator durch Filtration getrennten Produktes beträgt 47,3, was bei einer angenommenen Funktionalität von 1 einem Molekulargewicht von 1186 entspricht.

B) Endbegrenzende Blockierung

1186 g (ca. 1 Mol) des unter A) erhaltenen Polypropylenoxids werden nach Abtrennung des Katalysators mit 152 g (ca. 1,2 Mol) Benzylchlorid umgesetzt, indem in Gegenwart von 1,6 g Tetrabutylammoniumjodid zusammen mit der Lösung von 250 g $Na_2CO_3$ in 750 ml Wasser unter Stickstoff 5 h bei 100°C erwärmt wird. Wasser wird nach Beendigung der Reaktion durch Destillation bei 1333 Pa (10 mm Hg-Säule) und anschliessend Salz durch Filtration mit einem Filterhilfsmittel auf Silikatbasis entfernt. Die Hydroxylzahl beträgt 1,8.

C) Spaltung des Ketals

Die Spaltung des Ketalringes des unter B) erhaltenen Polypropylenoxids erfolgt, indem das Polypropylenoxid mit 1 n wässriger Schwefelsäure und Ethanol im Gewichtsverhältnis 1:1:1 vermischt und 8 h lang unter Rückfluss erhitzt wird. Nach Beendigung der Spaltungsreaktion wird das noch heisse Reaktionsgemisch mit 50%iger wässriger Natronlauge neutralisiert. Anschliessend werden alle flüchtigen Bestandteile im Bereich von 70 bis 80°C bei einem Vakuum von 1333 Pa (10 mm Hg-Säule) abdestilliert. Das anfallende $Na_2SO_4$ lässt sich unter Verwendung eines Filterhilfsmittels auf Silikatbasis in der Wärme vollständig abscheiden.

Die Hydroxylzahl des erhaltenen Polyethers beträgt 91,7

D) Anlagerung eines Ethylenoxid/Propylenoxid-Gemisches

Gemäss A) werden in 1236 g (ca. 1 Mol) des unter C) erhaltenen Polypropylenoxiddiols 4,8 g $Zn_3[Co(CN)_6]$ komplexiert mit Dimethylglykol dispergiert und danach 1270 g eines Gemisches von Ethylenoxid und Propylenoxid im Molverhältnis 5:1 angelagert.

Die Hydroxylzahl des vom Katalysator durch Filtration getrennten leicht getrübten, leicht blaustichigen Produktes beträgt 49,2, was bei einer angenommenen Funktionalität von 2 einem Molekulargewicht von 2280 entspricht.

Beispiel 2

(Herstellung eines verzweigten Ethylenoxid-Propylenoxid-Blockcopolymertetrols – Typ II)

A) Intermolekulare Verknüpfung

1186 g (1 Mol) des unter Beispiel 1 A) erhaltenen Polypropylenoxids werden nach Abtrennung des Katalysators mit 116,5 g (0,525 Mol) Isophorondiisocyanat in Gegenwart von 2 g Dibutylzinndilaurat durch Erwärmen auf 80°C für 4 h unter Stickstoff umgesetzt.

Die Hydroxylzahl des erhaltenen Produktes beträgt 1,5, der Isocyanatgehalt 0,03%.

B) Spaltung des Ketals

Das gemäss 2 A) hergestellte Polypropylenoxid wird im Gewichtsverhältnis 2:1:1 mit 1 n wässriger Salzsäure und Ethanol vermischt und für 4 h bei 80°C unter Rückfluss erhitzt. Nach Beendigung der Reaktion werden alle flüchtigen Bestandteile im Bereich von 70 bis 80°C bei einem Vakuum von 1333 Pa (10 mm Hg-Säule) abdestilliert, Restmengen an Wasser werden azeotrop mit Toluol entfernt.

Die OH-Zahl des erhaltenden Produktes beträgt 90,0.

C) Anlagerung eines Ethylenoxid/Propylenoxid-Gemisches

Gemäss Beispiel 1 A) werden in 2514 g (ca. 1 Mol) des unter 2 B) hergestellten Polypropylenoxidtetrols 9,0 g $Zn_3[Co(CN)_6]$ komplexiert mit Dimethylglykol dispergiert und danach 2180 g eines Gemisches von Ethylenoxid und Propylenoxid im Molverhältnis 5:1 angelagert.

Die Hydroxylzahl des vom Katalysator durch Filtration getrennten leicht gräulichen und leicht getrübten Produktes beträgt 50,4, was bei einer angenommenen Funktionalität von 4 einem Molekulargewicht von 4450 entspricht.

Beispiel 3

(Herstellung eines verzweigten Ethylenoxid-Propylenoxid-Blockcopolymertetrols – Typ II)

In 2514 g (ca. 1 Mol) des in Beispiel 2 B) erhaltenen Polypropylenoxidtetrols werden bei 80°C 14,1 g Kaliummethylat in einem Reaktor mit einem zwangsfördernden Umlaufsystem in Lösung gebracht. Danach wird wie in Beispiel 1 A) verfahren, wobei 2200 g (ca. 50 Mol) Ethylenoxid angelagert werden.

Nach Beendigung der Reaktion werden 150 g Wasser bei 80°C eingerührt. Anschliessend werden 20 g 30%ige Phosphorsäure zugegeben; es wird 0,25 h gerührt und mit $NaH_2PO_4$ auf einen pH-Wert von 7 eingestellt. Danach wird das Wasser bei 80 bis 90°C in einem Vakuum von 1333 Pa (10 mm Hg-Säule) abdestilliert und das entstandene Salz mit 10 g eines Filterhilfsmittels auf Silikatbasis abfiltriert.

Die Hydroxylzahl des farblosen, klaren Produktes beträgt 49, was bei einer angenommenen Funktionalität von 4 einem Molekulargewicht von 4580 entspricht.

Beispiel 4

(Herstellung eines verzweigten Ethylenoxid-Propylenoxid-Blockcopolymertriols – Typ III)

A) Spaltung des Ketals

1186 g (1 Mol) des unter Beispiel 1 A) erhaltenen Polypropylenoxids werden im Gewichtsverhältnis 2:1:1 mit 1 n wässriger Salzsäure und Ethanol vermischt und für 4 h bei 80°C unter Rückfluss erhitzt. Nach Beendigung der Reaktion werden alle flüchtigen Bestandteile im Bereich von 70 bis 80°C bei einem Vakuum von 1333 Pa (10 mm Hg-Säule) abdestilliert; Restmengen an Wasser werden azeotrop mit Toluol entfernt.

Die Hydroxylzahl des erhaltenen leicht getrübten Produktes beträgt 139.

B) Anlagerung eines Ethylenoxid/Propylenoxid-Gemisches

Gemäss Beispiel 1 A) werden in 1145 g (ca. 1 Mol) des gemäss 4 A) erhaltenen Polypropylenoxids 4,5 g $Zn_3[Co(CN)_6]$ komplexiert mit Dimethylglykol dispergiert und danach 1105 g eines Gemisches von Ethylenoxid und Propylenoxid im Molverhältnis 5:1 angelagert.

Die Hydroxylzahl des vom Katalysator durch Filtration getrennten, leicht gräulichen und leicht getrübten Produktes beträgt 77,2 was bei einer angenommenen Funktionalität von 3 einem Molekulargewicht von 2180 entspricht.

Beispiel 5

(Herstellung eines verzweigten Ethylenoxid-Propylenoxiddiols – Typ IV)

A) Anlagerung von Ethylenoxid

In 132 g (ca. 1 Mol) 2,2-Dimethyl-4-hydroxymethyl-1,3-dioxolan werden bei 80°C 7 g Kaliummethylat in einem Reaktor mit einem zwangsfördernden Umlaufsystem in Lösung gebracht. Danach wird wie in Beispiel 1 A) verfahren, wobei 440 g (ca. 10 Mol) Ethylenoxid angelagert werden.

Nach Beendigung der Reaktion wird gemäss Beispiel 3 verfahren, wobei 10 g 30%ige Phosphorsäure und 15 g Wasser eingesetzt werden.

Die Hydroxylzahl des farblosen, klaren Produktes beträgt 100, was bei einer angenommenen Funktionalität von 1 einem Molekulargewicht von 561 entspricht.

B) Endbegrenzende Blockierung

561 g (ca. 1 Mol) des unter 5 A) erhaltenen Polyethylenoxids werden nach Zugabe von 0,5 g Dibutlyzinndilaurat und 1,5 g Diazabicyclooctan unter Reinstickstoff auf 80°C erwärmt. Sodann werden 104 g (ca. 1,05 Mol) n-Butylisocyanat zugetropft. Nach der vollständigen Zugabe erfolgt für 6 h bei 90°C eine Nachreaktion. Das erhaltene Produkt ist klar und leicht gelblich gefärbt. Der NCO-Gehalt beträgt 0,12%, die Hydroxylzahl 1,2.

C) Spaltung des Ketals

Der gemäss 4 B) hergestellte Polyether wird gemäss Beispiel 2 B) behandelt.

Die Hydroxylzahl des erhaltenen Produktes beträgt 180.

D) Anlagerung von Propylenoxid

In 623 g (ca. 1 Mol) des in 5 C) erhaltenen Polyethers werden bei 80°C 14 g Kaliummethylat gelöst und sonst wie in Beispiel 1 A) verfahren, wobei 464 g (ca. 8 Mol) Propylenoxid angelagert werden.

Nach Beendigung der Reaktion wird gemäss Beispiel 3 verfahren, wobei 20 g 30%ige Phosphorsäure und 30 g Wasser eingesetzt werden.

Die Hydroxylzahl des farblosen, klaren Produktes beträgt 111, was bei einer angenommenen Funktionalität von 2 einem Molekulargewicht von 1011 entspricht.

Beispiel 6

(Herstellung eines verzweigten Ethylenoxid-Propylenoxid-Blockcopolymertetrols – Typ V)

A) Intermolekulare Verknüpfung

561 g (ca. 1 Mol) des gemäss Beispiel 5 A) erhaltenen Polyethylenoxids werden unter Reinstickstoff auf 80°C erwärmt. Sodann werden 96,1 g (0,525 Mol) Adipinsäuredichlorid zugegeben und die Mischung für 2 h bei 120°C zur Reaktion gebracht, wobei der entstehende Chlorwasserstoff abdestilliert wird.

Die Hydroxylzahl des entstandenen Produktes beträgt 3.

B) Spaltung des Ketals

Das unter 6 A) erhaltene Produkt wird im Gewichtsverhältnis 2:1 mit 50%iger Essigsäure für 6 h auf 80°C erwärmt und danach die flüchtigen Anteile bei 80 bis 90°C bei einem Vakuum von 1333 Pa (10 mm Hg-Säule) abdestilliert.

Die Hydroxylzahl des farblosen, klaren Produktes beträgt 192.

C) Anlagerung von Propylenoxid

In 1152 g (ca. 1 Mol) des in 5 B) erhaltenen Polyethylenoxidtetrols werden bei 80°C 14 g Kaliummethylat gelöst und sonst wie in Beispiel 1 A) verfahren, wobei 1508 g (ca. 26 Mol) Propylenoxid angelagert werden.

Nach Beendigung der Reaktion wird gemäss Beispiel 3 verfahren, wobei 20 g 30%ige Phosphorsäure und 80 g Wasser eingesetzt werden.

Die Hydroxylzahl des farblosen, klaren Produktes beträgt 90,9, was bei einer angenommenen Funktionalität von 4 einem Molekulargewicht von 2468 entspricht.

Beispiel 7

(Herstellung eines verzweigten Ethylenoxid-Propylenoxiddiols – Typ VI)

A) Anlagerung von Propylenoxid

In 176 g (ca. 1 Mol) 2,2-Dimethyl-5,5-dihydroxymethyl-1,3-dioxan, gelöst in 200 g Dimethylglykol, werden 1,75 g $Zn_3[Co(CN)_6]$ komplexiert mit Dimethylglykol dispergiert. Dann wird wie in Beispiel 1 A) verfahren, wobei 696 g Propylenoxid (ca. 12 Mol) angelagert werden.

Die Hydroxylzahl des vom Katalysator durch Filtration getrennten leicht bläulichen und leicht getrübten Produktes beträgt 140, was bei einer angenommenen Funktionalität von 2 einem Molekulargewicht von 802 entspricht.

B) Endbegrenzende Blockierung

Es wird verfahren wie in Beispiel 5 B), wobei 802 g (ca. 1 Mol) des Produktes aus 7 A) mit 208 g (2,1 Mol) n-Butylisocyanat in Gegenwart von 0,8 g Dibutylzinndilaurat und 2 g Diazabicyclooctan umgesetzt werden.

Das erhaltene Produkt ist leicht trübe und leicht gelblich gefärbt. Der NCO-Gehalt beträgt 0,21%, die Hydroxylzahl 1,6.

C) Spaltung des Ketals

Es wird verfahren wie in Beispiel 2 B).

Die Hydroxylzahl des erhaltenen Produktes beträgt 120.

D) Anlagerung von Ethylenoxid/Propylenoxid

In 935 g (ca. 1 Mol) des in 6 C) erhaltenen Polypropylenoxiddiols werden 3,4 g $Zn_3[Co(CN)_6]$ komplexiert mit Dimethylglykol dispergiert und gemäss Beispiel 1 A) verfahren, wobei 950 g eines Gemisches von 3 Mol Ethylenoxid und 1 Mol Propylenoxid angelagert werden.

Die Hydroxylzahl des leicht trüben und leicht bläulich gefärbten Produktes beträgt 62,9, was bei einer angenommenen Funktionalität von 2 einem Molekulargewicht von 1784 entspricht.

**Patentansprüche**

1. Verfahren zur Herstellung von Polyalkylenoxidblockpolymerisaten mit mindestens drei Polyalkylenoxidblöcken, wobei mindestens zwei Polyalkylenoxidblöcke gleichen Aufbau haben und sich hierin von dem anderen Polyalkylenoxidblock oder den anderen Polyalkylenoxidblöcken unterscheiden können, durch Anlagerung von Alkylenoxiden oder Gemischen hiervon an einen mindestens dreiwertigen Alkohol, dadurch gekennzeichnet, dass man

a) Alkylenoxide oder deren Gemische an die freie Hydroxylgruppe eines drei- oder mehrwertigen Alkohols, von dem mindestens zwei Hydroxylgruppen in Form eines Acetals oder Ketals vorliegen und mindestens eine dieser beiden Hydroxylgruppen eine primäre Hydroxylgruppe ist, anlagert,

b) die Acetal- oder Ketalgruppe durch Einwirkung von Säure spaltet und

c) an die nach b) erhaltene Verbindung Alkylenoxide oder deren Gemische anlagert.

2. Verfahren nach Anspruch 1, dadurch gekennzeichnet, dass man die Verfahrensstufe a) mit einem Acetal oder Ketal des Glycerins durchführt.

3. Verfahren nach Anspruch 1, dadurch gekennzeichnet, dass man die Verfahrensstufe a) mit einem Acetal oder Ketal eines Alkohols der Formel

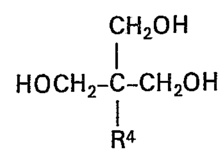

wobei $R^4$ ein Alkylrest mit 1 bis 4 Kohlenstoffatomen ist, durchführt.

4. Verfahren nach Anspruch 1, dadurch gekennzeichnet, dass man die Verfahrensstufe a) mit dem Monoacetal oder -ketal des Pentaerythrits durchführt.

5. Verfahren nach Anspruch 1, dadurch gekennzeichnet, dass man die Verfahrensstufen a) und c) mit Alkylenoxiden oder deren Gemischen der Formel

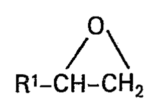

worin $R^1$ ein Wasserstoffrest oder eine gegebenenfalls halogenierte Kohlenwasserstoffgruppe mit 1 bis 30 Kohlenstoffatomen oder die Gruppe $-CH_2OR^2$ ist, und

$R^2$ eine Alkyl- oder Alkenylgruppe ist, durchführt.

6. Verfahren nach Anspruch 1, dadurch gekennzeichnet, dass man die nach der Verfahrensstufe a) vorliegende endständige Hydroxylgruppe des Polyalkylenoxidmonools vor der Verfahrensstufe b) blockiert.

7. Verfahren nach Anspruch 6, dadurch gekennzeichnet, dass man die endständige Hydroxylgruppe des Polyalkylenoxidmonools reversibel blockiert und die endbegrenzende Gruppe nach der Verfahrensstufe c) wieder abspaltet.

8. Verfahren nach Anspruch 6, dadurch gekennzeichnet, dass man die endständige Hydroxylgruppe des Polyalkylenoxidmonools mit einem organischen Monoisocyanat umsetzt.

9. Verfahren nach Anspruch 6, dadurch gekennzeichnet, dass man die endständige Hydroxylgruppe des Polyalkylenoxidmonools mit Alkylhalogenid mit 1 bis 4 Kohlenstoffatomen, einem Arylhalogenid oder einem Arylalkylhalogenid umsetzt.

10. Verfahren nach Anspruch 6, dadurch gekennzeichnet, dass man die endständige Hydroxylgruppe des Polyalkylenoxidmonools mit einer olefinisch ungesättigten Verbindung umsetzt.

11. Verfahren nach Anspruch 7, dadurch gekennzeichnet, dass man die endständige Hydroxylgruppe des Polyalkylenoxidmonools mit einer organischen Monocarbonsäure oder einem organischen Säurechlorid umsetzt und nach der Verfahrensstufe c) verseift.

12. Verfahren nach Anspruch 1, dadurch gekennzeichnet, dass man die nach der Verfahrensstufe a) vorliegenden Polyalkylenoxidmonoole intermolekular durch Umsetzung mit einer mindestens difunktionellen in bezug auf Hydroxylgruppen reaktiven Verbindung verknüpft.

13. Verfahren nach Anspruch 12, dadurch gekennzeichnet, dass man die nach der Verfahrensstufe a) vorliegenden Polyalkylenoxidmonoole mit organischen Di- oder Polyisocyanaten intermolekular verknüpft.

14. Verfahren nach Anspruch 12, dadurch gekennzeichnet, dass man die nach der Verfahrensstufe a) vorliegenden Polyalkylenoxidmonoole mit organischen Di- oder Polysäurechloriden intermolekular verknüpft.

## Claims

1. Process for the preparation of polyalkylene oxide block polymers having at least three polyalkylene oxide blocks, with at least two polyalkylene oxide blocks having the same structure but being able to differ in structure from the other polyalkylene oxide block or the other polyalkylene oxide blocks, by addition reaction of alkylene oxides or mixtures thereof with an at least trihydric alcohol, characterised in that

a) alkylene oxides or their mixtures are caused to undergo addition reaction with the free hydroxyl group of a trihydric or polyhydric alcohol of which at least two hydroxyl groups are in the form of an acetal or ketal and at least one of these two hydroxyl groups is a primary hydroxyl group,

b) the acetal or ketal group is cleaved by the action of acid and

c) alkylene oxides or their mixtures are caused to undergo addition reaction with the compound obtained according to b).

2. Process according to claim 1, characterised in that process stage a) is performed with an acetal or ketal of glycerol.

3. Process according to claim 1, characterised in that process stage a) is performed with an acetal or ketal of an alcohol of the formula

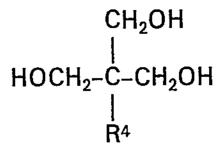

wherein $R^4$ is an alkyl radical having 1 to 4 carbon atoms.

4. Process according to claim 1, characterised in that process stage a) is performed with the monoacetal or monoketal of pentaerythritol.

5. Process according to claim1, characterised in that process stages a) and c) are performed with alkylene oxides, or their mixtures, of the formula

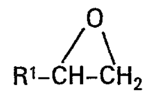

wherein $R^1$ is a hydrogen radical or an optionally halogenated hydrocarbon group having 1 to 30 carbon atoms or is the group $-CH_2OR^2$, and $R^2$ is an alkyl or alkenyl group.

6. Process according to claim 1, characterised in that the terminal hydroxyl group, present after process stage a), of the polyalkylene oxide monool is blocked before process stage b).

7. Process according to claim 6, characterised in that the terminal hydroxyl group of the polyalkylene oxide monool is blocked reversibly and the terminal-blocking group is cleaved off after process stage c).

8. Process according to claim 6, characterised in that the terminal hydroxyl group of the polyalkylene oxide monool is reached with an organic monoisocyanate.

9. Process according to claim 6, characterised in that the terminal hydroxyl group of the polyalkylene oxide monool is reacted with an alkyl halide having 1 to 4 carbon atoms, an aryl halide or an aralkyl halide.

10. Process according to claim 6, characterised in that the terminal hydroxyl group of the polyalkylene oxide monool is reacted with an olefinically unsaturated compound.

11. Process according to claim 7, characterised in that the terminal hydroxyl group of the polyalkylene oxide monool is reacted with an organic monocarboxylic acid or an organic acid chloride and is hydrolysed after process stage c).

12. Process according to claim 1, characterised in that the polyalkylene oxide monools present after process stage a) are intermolecularly linked by reaction with a compound which is at least difunctionally reactive in relation to hydroxyl groups.

13. Process according to claim 12, characterised in that the polyalkylene oxide monools present after process stage a) are intermolecularly linked with organic diisocyanates or polyisocyanates.

14. Process according to claim 12, characterised in that the polyalkylene oxide monools present after process stage a) are intermolecularly

linked with organic diacid chlorides or polyacid chlorides.

## Revendications

1. Procédé pour la préparation de polymères en blocs polyoxyalkylénés possédant au moins deux blocs poly(oxyde d'alkylène), où au moins deux blocs poly(oxyde d'alkylène) ont la même structure et peuvent ici se distinguer de l'autre bloc poly(oxyde d'alkylène) ou des autres blocs poly(oxyde d'alkylène), par fixation d'oxydes d'alkylène ou de leurs mélanges sur un alcool au moins trivalent, caractérisé en ce que

a) on fixe des oxydes d'alkylène ou leurs mélanges sur le groupe hydroxyle libre d'un alcool au moins trivalent, dont au moins deux groupes hydroxyle se présent sous la forme d'un acétal ou d'un cétal et dont au moins l'un de ces deux groupes hydroxyle est un groupe hydroxyle primaire,

b) on dissocie le groupe acétal ou cétal sous l'action d'un acide, et

c) on fixe sur le composé obtenu selon b) des oxydes d'alkylène ou leurs mélanges.

2. Procédé selon la revendication 1, caractérisé en ce qu'on procède à l'étape de procédé a) avec un acétal ou un cétal du glycérol.

3. Procédé selon la revendication 1, caractérisé en ce qu'on réalise l'étape de procédé a) avec un acétal ou un cétal d'un alcool de formule

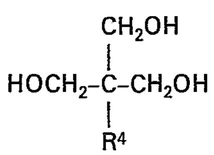

dans laquelle $R^4$ est un radical alkyle à 1 à 4 atomes de carbone.

4. Procédé selon la revendication 1, caractérisé en ce qu'on réalise l'étape de procédé a) avec le monoacétal ou le monocétal du pentaérythritol.

5. Procédé selon la revendication 1, caractérisé en ce qu'on procède aux étapes de procédé a) et c) avec des oxydes d'alkylène ou leurs mélanges de formule

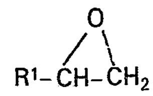

dans laquelle $R^1$ est un résidu hydrogène ou un groupe hydrocarboné éventuellement halogéné à 1 à 30 atomes de carbone, ou le groupe $-CH_2OR^2$, et $R^2$ est un groupe alkyle ou alcényle.

6. Procédé selon la revendication 1, caractérisé en ce qu'on bloque avant l'étape de procédé b) le groupe hydroxyle terminal, présent après l'étape de procédé a), du monool polyoxyalkyléné.

7. Procédé selon la revendication 6, caractérisé en ce qu'on bloque de nouveau le groupe hydroxyle terminal du monool polyoxyalkyléné et qu'on dissocie de nouveau le groupe terminal après l'étape de procédé c).

8. Procédé selon la revendication 6, caractérisé en ce qu'on fait réagir le groupe hydroxyle terminal du monool polyoxyalkyléné avec un monoisocyanate organique.

9. Procédé selon la revendication 6, caractérisé en ce qu'on fait réagir le groupe hydroxyle terminal du monool polyoxyalkyléné avec un halogénure d'alkyle à 1 à 4 atomes de carbone, un halogénure d'aryle ou un halogénure d'arylalkyle.

10. Procédé selon la revendication 6, caractérisé en ce qu'on fait réagir le groupe hydroxyle terminal du monool polyoxyalkyléné avec un composé à insaturation oléfinique.

11. Procédé selon la revendiation 7, caractérisé en ce qu'on fait réagir le groupe hydroxyle terminal du monool polyoxyalkyléné avec un acide monocarboxylique insaturé ou un chlorure d'acide organique, et qu'on le saponifie selon l'étape de procédé c).

12. Procédé selon la revendication 1, caractérisé en ce qu'on lie les monools polyoxyalkylénées obtenus après l'étape de procédé a) d'une manière intermoléculaire par réaction avec un composé réactif au moins bifonctionnel pour ce qui est des groupes hydroxyle.

13. Procédé selon la revendication 12, caractérisé en ce qu'on procède à une liaison intermoléculaire entre les monools polyoxyalkylénés présents après l'étape de procédé a) et les di- ou polyisocyanates organiques.

14. Procédé selon la revendication 12, caractérisé en ce qu'on procède à une liaison intermoléculaire entre les monools polyoxyalkylénés présents après l'étape de procédé a) et des chlorures de diacides ou de polyacides organiques.